# EUROPEAN PATENT SPECIFICATION

(11) **EP 3 792 157 B1**
(45) Date of publication and mention of the grant of the patent: **11.10.2023**
(21) Application number: 19207871.5
(22) Date of filing: 08.11.2019
(51) Int. Cl.: B62D 35/00, B62D 37/02

(54) **TRANSLATABLE ACTIVE SIDE AIR CURTAIN ASSEMBLY FOR A MOTOR VEHICLE**
VERSCHIEBBARE AKTIVE SEITENLUFTSCHLEIERANORDNUNG FÜR EIN KRAFTFAHRZEUG
ENSEMBLE DE RIDEAU D'AIR LATÉRAL ACTIF DÉPLAÇABLE PAR TRANSLATION POUR VÉHICULE À MOTEUR

(30) Priority: 10.09.2019 CN 201910854926; 10.09.2019 CN 201921501218 U
(43) Date of publication of application: 17.03.2021
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: GUI, Xiaogang, SHANGHAI, 201805 (CN); LIN, Miaotian, SHANGHAI, 201805 (CN)
(74) Representative: LLR

(56) References cited:
- EP-A1- 3 476 701
- WO-A1-2017/098106
- CN-A- 107 031 742
- CN-B- 107 031 742
- DE-A1- 10 324 514
- DE-B4- 10 324 514
- JP-A- 2006 069 396

## Description

### FIELD OF THE INVENTION

The present invention relates to automotive exteriors, and more particularly, to a translatable active side air curtain assembly.

### BACKGROUND OF THE INVENTION

Due to vehicle styling, in a running process of a vehicle, fog lamp cover areas of most vehicle models all belong to a high pressure area. Consequently, wind resistance of the entire vehicle is increased. To improve the wind pressure of such areas, an existing method is to optimize styling, that is, round the areas, and another method is to directly make a hole in a high pressure area. Obviously, the two methods both change the style of the entire vehicle, especially when it is in a parking state, the appearance being thus greatly affected. Such an arrangement can be seen for example in EP 3 476 701 A1.

### SUMMARY OF THE INVENTION

To avoid changing entire vehicle styling while improving wind pressure, the present invention provides a translatable active side air curtain assembly.

The present invention provides a translatable active side air curtain assembly for a motr vehicle, including a wind guide element, a rotating shaft, a blade, and a driving mechanism. The blade is provided with a rack mechanism. The rotating shaft is provided with a gear mechanism engaged with the rack mechanism . The blade is mounted on the wind guide element through the rotating shaft. The driving mechanism is connected to the rotating shaft to and can drive the rotating shaft to rotate so as to drive the blade to translate between an open position and a closed position. The wind guide element is provided with a top part and a base part that are opposite to each other, and the rotating shaft is pivotably mounted between the top part and the base part.

Preferably, the base part is mounted with a baseplate which is provided with a mounting hole, and a bottom end of the rotating shaft is pivotably inserted into the mounting hole.

Preferably, the baseplate is a wear-resistant plate.

Preferably, a middle part of the baseplate is provided with a screw through hole, and a screw runs through the screw through hole to fasten the baseplate to the base part.

Preferably, the top part is provided with a mounting base in which the driving mechanism is mounted, and a top end of the rotating shaft pivotably runs through the top part and extends upward and is connected to the driving mechanism.

Preferably, the wind guide element is provided with a guide rail slot configured to define a movement track of the blade, and the blade is mounted on the guide rail slot.

Preferably, the blade comprises a body, the gear mechanism comprising a first gear and a second gear that radially extend from the rotating shaft and are separated from each other, the rack mechanism comprising a first rack and a second rack that laterally extend from the body and are engaged respectively with the first gear and the second gear.

Preferably, the driving mechanism is connected to a body control module or an electronic control unit of a vehicle.

Preferably, the driving mechanism is an electrical motor.

In the translatable active side air curtain assembly according to the present invention, opening of the blade is accurately controlled by the driving mechanism and the rotating shaft and wind pressure in an area of the translatable active side air curtain is improved through the opening and closing of the blade, thus wind resistance of the entire vehicle is improved and the perfection of the entire vehicle styling is ensured. In conclusion, the translatable active side air curtain assembly according to the present invention not only allows to improve aerodynamic performance of the entire vehicle and reduce fuel consumption, but also to reduce CO₂ emission.

The present invention further provides a motor vehicle comprising a translatable active side air curtain assembly as described above.

### BRIEF DESCRIPTION OF THE DRAWINGS

FIG. 1 is a schematic diagram of a translatable active side air curtain assembly according to a preferred embodiment of the present invention in an open state;
FIG. 2 is a schematic diagram of the translatable active side air curtain assembly of FIG. 1 in a closed state;
FIG. 3 is a schematic diagram showing the mounting of a baseplate of the translatable active side air curtain assembly of FIG. 1;
FIG. 4 is a schematic diagram showing the mounting of a rotating shaft of the translatable active side air curtain assembly of FIG. 1;
FIG. 5 is a schematic diagram showing the mounting of a blade of the translatable active side air curtain assembly of FIG. 1; and
FIG. 6 is a schematic diagram showing the mounting of a driving mechanism of the translatable active side air curtain assembly of FIG. 1.

### DETAILED DESCRIPTION OF THE EMBODIMENTS

The following provides preferred embodiments of the present invention with reference to the accompanying drawings and provides detailed descriptions.

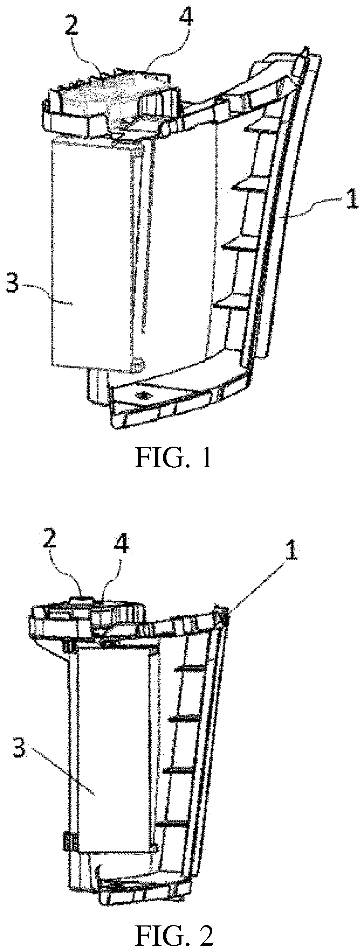

As shown in FIG. 1 and FIG. 2, a translatable active side air curtain assembly according to a preferred embodiment of the present invention includes a wind guide element 1, a rotating shaft 2, a blade 3, and a driving mechanism 4. The blade 3 is mounted on the wind guide element 1 through the rotating shaft 2. The driving mechanism 4 is connected to the rotating shaft 2 to drive the blade 3 to move between an open position and a closed position. In an open state shown in FIG. 1, the blade 3 is opened to reduce wind pressure in this area and reduce wind resistance, which corresponds to a vehicle high-speed running state. In a closed state shown in FIG. 2, the blade 3 is closed to keep original styling, which corresponds to a vehicle a low-speed state or a vehicle parking state.

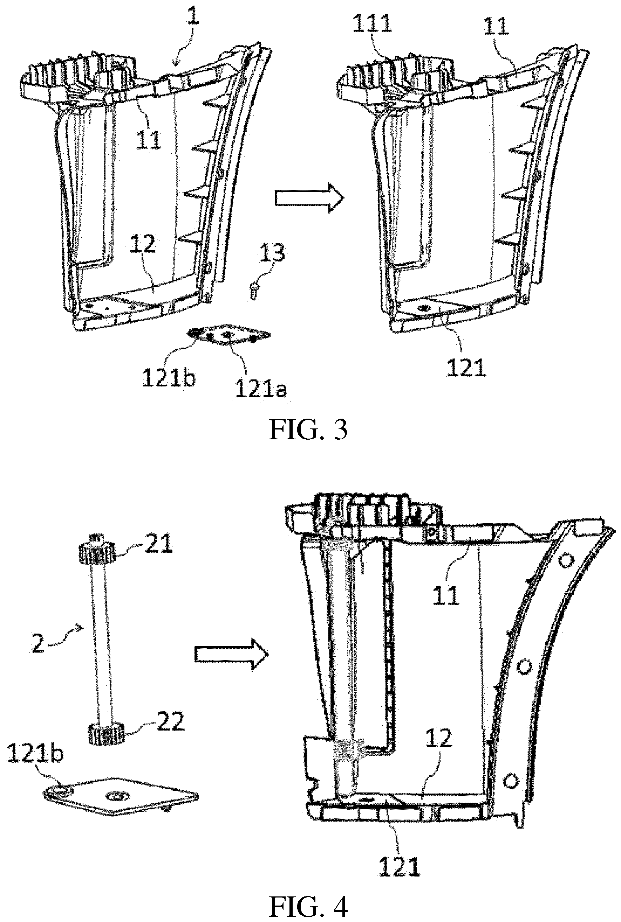

As shown in FIG. 3, the wind guide element 1 includes a top part 11 and a base part 12 that are fixedly connected and opposite to each other. A structure of the wind guide element 1 is similar to that of a wind guide element in the prior art and thus is not described herein. It is different from the prior art in that a mounting base 111 is formed on the top part 11, and a baseplate 121 is mounted on a top surface of the base part 12. Specifically, a middle part of the baseplate 121 is provided with a screw through hole 121a, and a screw 13 runs through the screw through hole 121a to fasten the baseplate 121 to the base part 12. In addition, a corner of the baseplate 121 is provided with a mounting hole 121b. It should be understood that, the baseplate 121 is a wear-resistant plate.

As shown in FIG. 4, the rotating shaft 2 is disposed between the top part 11 and the base part 12 of the wind guide element 1. Specifically, a top end of the rotating shaft 2 pivotably runs through the top part 11 and extends upward. A bottom end of the rotating shaft 2 is inserted into the mounting hole 121b of the baseplate 121 to pivot. In addition, the rotating shaft 2 is provided with a first gear 21 and a second gear 22 that radially extend and are separated from each other.

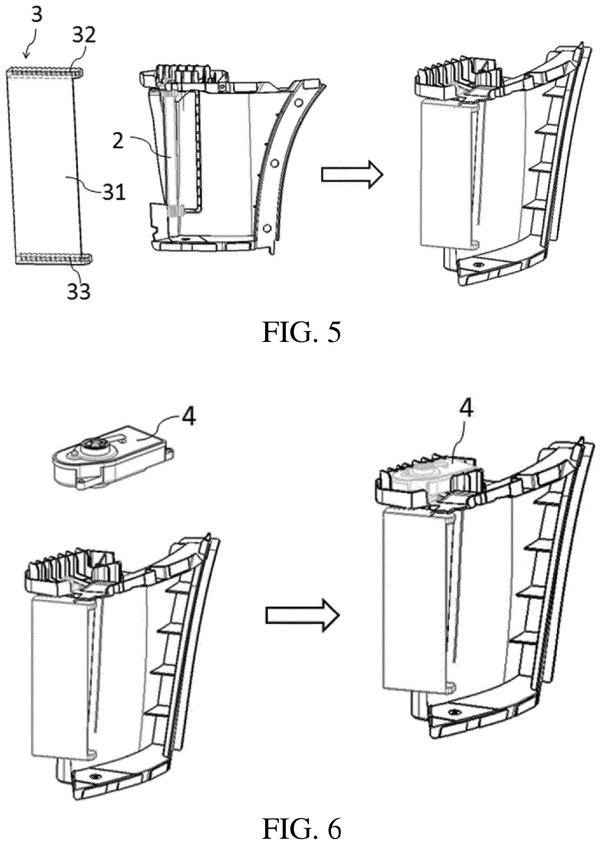

The wind guide element 1 is further provided with a guide rail slot configured to define a movement track of the blade 3. The blade 3 is mounted on the guide rail slot. As shown in FIG. 5, the blade 3 includes a body 31 and a first rack 32 and a second rack 33 that laterally extend from the body. The first rack 32 is meshed with the first gear 21, and the second rack 33 is meshed with the second gear 22, to connect the blade 3 to the rotating shaft 2 such that the blade 3 is driven to translate by rotation of the rotating shaft 2. As shown in FIG. 1, when the rotating shaft 2 is rotated to drive the blade 3 to translate to the open position, the blade 3 does not cover an air outlet, the wind pressure in this area is thus reduced. It should be understood that, the extent to which the air outlet is opened (i.e. the extent to which the blade 3 covers the air outlet) may be adjusted according to the driving speed of the vehicle. As shown in FIG. 2, when the rotating shaft 2 is rotated to drive the blade 3 to translate to the closed position, the blade 3 covers the air outlet completely, the original styling of the vehicle is thus restored and the appearance of the vehicle in low-speed or parking state is improved. It should be understood that, a specific shape of the blade 3 is not limited, and may be designed according to different shapes of the air outlet.

As shown in FIG. 6, the driving mechanism 4 is an electrical motor which is mounted in the mounting base 111 of the top part 11 of the wind guide element 1 and is connected to the top end of the rotating shaft 2 to drive the rotating shaft 2 to rotate.

In addition, the driving mechanism is connected to a body control module (BCM) or an electronic control unit (ECU) of a vehicle. In this way, the BCM or ECU may send an instruction according to a speed of the entire vehicle to accurately control the opening of the blade 3 through the driving mechanism 4 and the rotating shaft 2. Wind pressure in an area of the translatable active side air curtain is improved through the opening and closing of the blade 3, thus wind resistance of the entire vehicle is improved and the perfection of the entire vehicle styling is ensured.

The foregoing descriptions are merely preferred embodiments of the present invention, but are not intended to limit the scope of the present invention. Various changes may be further made to the foregoing embodiments of the present invention. The invention is defined by the claims.

What is not described in detail in the present invention all belongs to common technologies.

## Claims

1. A translatable active side air curtain assembly for a motor vehicle, comprising a wind guide element (1), a rotating shaft (2), a blade (3), and a driving mechanism (4), wherein
the blade (3) is provided with a rack mechanism (32, 33) and the rotating shaft (2) is provided with a gear mechanism (21, 22) engaged with the rack mechanism (32, 33), the blade (3) being mounted on the wind guide element (1) through the rotating shaft (2), wherein
the driving mechanism (4) is connected to the rotating shaft (2) and can drive the rotating shaft (2) to rotate so as to drive the blade (3) to translate between an open position and a closed position, and **characterized in that in that** the wind guide element (1) is provided with a top part (11) and a base part (12) that are opposite to each other, and the rotating shaft (2) is pivotably mounted between the top part (11) and the base part (12).

2. The translatable active side air curtain assembly for a motor vehicle according to claim 1, wherein the base part (12) is mounted with a baseplate (121) which is provided with a mounting hole (121b), and a bottom end of the rotating shaft (2) is pivotably inserted into the mounting hole.

3. The translatable active side air curtain assembly for a motor vehicle according to claim 2, wherein the baseplate (121) is a wear-resistant plate.

4. The translatable active side air curtain assembly for a motor vehicle according to claim 2 or 3, wherein a middle part of the baseplate (121) is provided with a screw through hole (121a), and a screw (13) runs through the screw through hole to fasten the baseplate to the base part (12).

5. The translatable active side air curtain assembly for a motor vehicle according to anyone of claims 1 to 4, wherein the top part (11) is provided with a mounting base (111) in which the driving mechanism (4) is mounted, and a top end of the rotating shaft (2) pivotably runs through the top part and extends upward and is connected to the driving mechanism.

6. The translatable active side air curtain assembly for a motor vehicle according to anyone of the preceding claims, wherein the wind guide element (1) is provided with a guide rail slot configured to define a movement track of the blade (3), and the blade is mounted on the guide rail slot.

7. The translatable active side air curtain assembly for a motor vehicle according to anyone of the preceding claims, wherein the blade (3) comprises a body (31), the gear mechanism comprising a first gear (21) and a second gear (22) that radially extend from the rotating shaft (2) and are separated from each other, the rack mechanism comprising a first rack (32) and a second rack (33) that laterally extend from the body (31) and are engaged respectively with the first gear (21) and the second gear (22) .

8. The translatable active side air curtain assembly for a motor vehicle according to anyone of the preceding claims, wherein the driving mechanism (4) is connected to a body control module or an electronic control unit of a vehicle.

9. The translatable active side air curtain assembly for a motor vehicle according to anyone of the preceding claims, wherein the driving mechanism (4) is an electrical motor.

10. A motor vehicle comprising a translatable active side air curtain assembly according to anyone of preceding claims.

## Patentansprüche

1. Verschiebbare aktive Seitenluftschleieranordnung für ein Kraftfahrzeug, die ein Windleitelement (1), eine Drehwelle (2), einen Flügel (3) und einen Antriebsmechanismus (4) aufweist, wobei
der Flügel (3) mit einem Zahnstangenmechanismus (32, 33) versehen ist und die Drehwelle (2) mit einem Getriebemechanismus (21, 22) versehen ist, der mit dem Zahnstangenmechanismus (32, 33) in Eingriff steht, wobei der Flügel (3) durch die Drehwelle (2) an dem Windleitelement (1) angebracht ist, wobei
der Antriebsmechanismus (4) mit der Drehwelle (2) verbunden ist und die Drehwelle (2) in Drehung versetzen kann, um den Flügel (3) zur Verschiebung zwischen einer offenen und einer geschlossenen Position anzutreiben, und **dadurch gekennzeichnet, dass** das Windleitelement (1) mit einem Oberteil (11) und einem Basisteil (12) versehen ist, die einander gegenüberliegen, und die Drehwelle (2) schwenkbar zwischen dem Oberteil (11) und dem Basisteil (12) angebracht ist.

2. Verschiebbare aktive Seitenluftschleieranordnung für ein Kraftfahrzeug nach Anspruch 1, wobei das Basisteil (12) mit einer Basisplatte (121) montiert ist, die mit einem Montageloch (121b) versehen ist, und ein unteres Ende der Drehwelle (2) schwenkbar in das Montageloch eingesetzt ist.

3. Verschiebbare aktive Seitenluftschleieranordnung für ein Kraftfahrzeug nach Anspruch 2, wobei die Basisplatte (121) eine verschleißfeste Platte ist.

4. Verschiebbare aktive Seitenluftschleieranordnung für ein Kraftfahrzeug nach Anspruch 2 oder 3, wobei ein mittlerer Teil der Basisplatte (121) mit einem Schraubendurchgangsloch (121a) versehen ist und eine Schraube (13) durch das Schraubendurchgangsloch verläuft, um die Grundplatte an dem Basisteil (12) zu befestigen.

5. Verschiebbare aktive Seitenluftschleieranordnung für ein Kraftfahrzeug nach einem der Ansprüche 1 bis 4, wobei das Oberteil (11) mit einer Montagebasis (111) versehen ist, in der der Antriebsmechanismus (4) montiert ist, und ein oberes Ende der Drehwelle (2) schwenkbar durch das Oberteil verläuft und sich nach oben erstreckt und mit dem Antriebsmechanismus verbunden ist.

6. Verschiebbare aktive Seitenluftschleieranordnung für ein Kraftfahrzeug nach einem der vorhergehenden Ansprüche, wobei das Windleitelement (1) mit einem Führungsschienenschlitz versehen ist, der so gestaltet ist, dass er eine Bewegungsspur des Flügels (3) definiert, und der Flügel auf dem Führungsschienenschlitz montiert ist.

7. Verschiebbare aktive Seitenluftschleieranordnung für ein Kraftfahrzeug nach einem der vorhergehenden Ansprüche, wobei der Flügel (3) einen Körper (31) aufweist, der Getriebemechanismus ein erstes Zahnrad (21) und ein zweites Zahnrad (22) aufweist, die sich radial von der Drehwelle (2) erstrecken und voneinander getrennt sind, der Zahnstangenmechanismus eine erste Zahnstange (32) und eine zweite Zahnstange (33) aufweist, die sich seitlich von dem Körper (31) erstrecken und mit dem ersten Zahnrad (21) beziehungsweise dem zweiten Zahnrad (22) in Eingriff stehen.

8. Verschiebbare aktive Seitenluftschleieranordnung für ein Kraftfahrzeug nach einem der vorhergehenden Ansprüche, wobei der Antriebsmechanismus (4) mit einem Karosseriesteuermodul oder einer elektronischen Steuereinheit eines Fahrzeugs verbunden ist.

9. Verschiebbare aktive Seitenluftschleieranordnung für ein Kraftfahrzeug nach einem der vorhergehenden Ansprüche, wobei der Antriebsmechanismus (4) ein Elektromotor ist.

10. Kraftfahrzeug mit einer verschiebbaren aktiven Seitenluftschleieranordnung nach einem der vorhergehenden Ansprüche.

## Revendications

1. Ensemble de rideau d'air latéral actif mobile en translation pour véhicule automobile, comprenant un élément de guidage du vent (1), un arbre rotatif (2), une lame (3) et un mécanisme d'entraînement (4), dans lequel la lame (3) est munie d'un mécanisme à crémaillère (32, 33) et l'arbre rotatif (2 ) est muni d'un mécanisme à engrenages (21, 22) engagée avec le mécanisme à crémaillère (32, 33), la lame (3) étant montée sur l'élément de guidage du vent (1) à travers l'arbre rotatif (2), dans lequel le mécanisme d'entraînement (4) est relié à l'arbre rotatif (2) et peut entraîner l 'arbre rotatif (2) à tourner de manière à entraîner la lame (3 ) à se déplacer en translation entre une position ouverte et une position fermée, et **caractérisé en ce que** l'élément de guidage du vent (1) est pourvu d'une partie supérieure (11) et d'une partie de base (12) opposées l'une à l'autre, et que l'arbre rotatif (2) est monté pivotable entre la partie supérieure (11) et la partie de base (12).

2. Ensemble de rideau d'air latéral actif mobile en translation pour véhicule automobile selon la revendication 1, dans lequel la partie de base (12) est pourvue d'une plaque de base (121) qui est munie d'un trou de montage (121b), et une extrémité inférieure de l'arbre rotatif (2) est insérée pivotable dans le trou de montage.

3. Ensemble de rideau d'air latéral actif mobile en translation pour véhicule automobile selon la revendication 2, dans lequel la plaque de base (121) est une plaque résistante à l'usure.

4. Ensemble de rideau d'air latéral actif mobile en translation pour véhicule automobile selon la revendication 2 ou 3, dans lequel une partie centrale de la plaque de base (121) est munie d'un trou traversant pour vis (121a), et une vis (13) traverse le trou traversant pour vis pour fixer la plaque de base à la partie de base (12).

5. Ensemble de rideau d'air latéral actif mobile en translation pour véhicule automobile selon l'une quelconque des revendications 1 à 4, dans lequel la partie supérieure (11) est munie d'une base de montage (111) dans laquelle le mécanisme d'entraînement (4) est monté, et une extrémité supérieure de l'arbre rotatif (2) traverse pivotement la partie supérieure et s'étend vers le haut et est reliée au mécanisme d'entraînement.

6. Ensemble de rideau d'air latéral actif mobile en translation pour véhicule automobile selon l'une quelconque des revendications précédentes, dans lequel l'élément de guidage du vent (1) est muni d'une fente de rail de guidage configurée pour définir une trajectoire de mouvement de la lame (3) et la lame est montée sur la fente de rail de guidage.

7. Ensemble de rideau d'air latéral actif mobile en translation pour véhicule automobile selon l'une quelconque des revendications précédentes, dans lequel la lame (3) comprend un corps (31), le mécanisme à engrenages comprenant un premier engrenage (21) et un deuxième engrenage (22) qui s'étendent radialement de l'arbre rotatif ( 2) et sont séparés l'un de l'autre, le mécanisme à crémaillère comprenant une première crémaillère (32) et une seconde crémaillère (33) qui s'étendent latéralement du corps (31) et sont engagés respectivement avec le premier engrenage (21) et le deuxième engrenage (22) .

8. Ensemble de rideau d'air latéral actif mobile en translation pour véhicule automobile selon l'une quelconque des revendications précédentes, dans lequel le mécanisme d'entraînement (4) est relié à un module de commande de carrosserie ou à une unité de commande électronique d'un véhicule.

9. Ensemble de rideau d'air latéral actif mobile en translation pour véhicule automobile selon l'une quelconque des revendications précédentes, dans lequel le mécanisme d'entraînement (4) est un moteur électrique.

10. Véhicule automobile comprenant un ensemble de rideau d'air latéral actif mobile en translations selon l'une quelconque des revendications précédentes.
